Europäisches Patentamt

(19) European Patent Office

Office européen des brevets

(11) Publication number: **0 011 479**
**B1**

# EUROPEAN PATENT SPECIFICATION

(45) Date of publication of patent specification: **31.08.83**

(21) Application number: **79302554.5**

(22) Date of filing: **13.11.79**

(51) Int. Cl.³: **C 13 L 1/08, A 23 L 1/187, A 23 L 1/195**

(54) Process for modifying starch and pregelatinized modified starch for use in instant puddings.

(30) Priority: **13.11.78 US 960218**
**13.11.78 US 960219**

(43) Date of publication of application:
**28.05.80 Bulletin 80/11**

(45) Publication of the grant of the patent:
**31.08.83 Bulletin 83/35**

(84) Designated Contracting States:
**AT BE CH DE FR GB IT LU NL SE**

(56) References cited:
**DE - C - 704 718**
**GB - A - 515 351**
**US - A - 3 443 990**
**US - A - 4 159 982**

**DIE STÄRKE, vol. 25, no. 1, 1973, N. KROG:
"The influence of food emulsifiers on pasting
temperature and viscosity of various starches"
pages 22—27.**

**The file contains technical information
submitted after the application was filed and not
included in this specification**

(73) Proprietor: **GENERAL FOODS CORPORATION**
**250 North Street**
**White Plains, N.Y. 10625 (US)**

(72) Inventor: **Mitchell, W.A.**
**175 Jacksonville Park**
**Lincoln Park. New Jersey 07035 (US)**
Inventor: **Seidell, William Charles**
**5 Cardinal Lane**
**Monsey, New York 10952 (US)**
Inventor: **O'Rourke, Joseph Daniel**
**130 Hitching Post Drive**
**Dover, Delaware 19901 (US)**

(74) Representative: **Baillie, Iain Cameron et al,
c/o Ladas & Parry Isartorplatz 5
D-8000 München 2 (DE)**

# Process for modifying starch and pregelatinized modified starch for use in instant puddings

Generally there are two principal ways in which starch can be processed. First, starch can be chemically modified in water or solvents and dried, resulting in whole, individual starch granules. This is the type of starch used in puddings which require cooking. Secondly, if an instant water soluble starch is needed, the starch is pregelatinized by, for example, passing a starch slurry over a drum dryer. The drum dryer simultaneously cooks and dries the starch in cold water swellable sheets. This type of starch is used in instant puddings.

A starch which is chemically modified is one in which physical properties such as viscosity, texture, dispersibility, stability and syneresis are altered. The important chemical means of making these kinds of changes are acid hydrolysis, oxidation, cross-linking, esterification and etherification. However, associated with some chemical modifications are undesirable by-products or residues (e.g., chlorohydrin residues, etc.). Another suggested means is the creation of an osmotic condition by the addition of various salts to a starch slurry prior to gelatinization in order to inhibit bursting of starch granules by controlling swelling of the granules. However, the resultant starch granules generally do not fully swell and lack uniformity in the degree of gelatinization thus producing a starch which is substantially inferior to the chemically modified starches.

Thus the present application is concerned primarily with the method of obtaining starch products, suitable for use in instant puddings utilizing a starch such as tapioca starch which is not chemically modified by the addition of any chemicals which react with the starch. In the present process the starch is physically modified by complexing and drum drying the tapioca starch with certain specific additives which act to mimic the characteristics of a chemically modified starch in an instant pudding formulation. Among the desirable characteristics are firmness, creaminess, smoothness, gloss, and a melt away or mouth release effect. The desired objective is to obtain a good quality starch for use in instant pudding without the necessity of chemical modification of the starch molecule itself. Additionally, since no undesirable chemicals will be utilized to react with a starch, the otherwise necessary step of washing a starch to remove reaction salts or residues formed during manufacturing is not necessary. Thus, the environmental problem of disposing of chemical effluents is eliminated.

It thus becomes a feature of this invention to provide a process for the modification of starch but without undesirable by-products or residues.

It is a further feature of one embodiment of this invention to produce a physically modified pregelatinized startch having properties of a chemically modified pregelatinized starch.

According to the invention therefore there is provided a process for making a pregelatinized starch product suitable for use in an instant pudding comprising mixing an aqueous slurry of ungelatinized starch with a complexing modifier which is

(a) at least one of sodium or calcium stearoyl-2-lactylate; or (b) a complexing combination of a protein and an emulsifier; and heating the slurry to a temperature and for a period of time sufficient to gelatinize the starch and to obtain whole starch granules uniformly swelled while minimizing bursting and undercooking of the starch granules; and drying the slurry. The amount of complexing modifier and the nature of the emulsifier and protein should be effective to uniformly swell the starch granules and minimize bursting and undercooking of the starch granules during gelatinization and to impart the resultant dry pregelatinized starch when rehydrated with a smoother, creamier mouthfeel and a higher sheen without appreciable loss of viscosity or body than a starch pregelatinized without said modifier.

Sodium or calcium stearoyl-2-lactylate has been suggested for use in starch treatments (Die Stärke, Vol. 25, No. 1 (1973) M. Krog, pages 22—27) but only in the context of modifying pasting properties and there is no indication of the possible effects on gelatinized products for use particularly in instant puddings.

Similarly the addition of proteins for nutritive purposes to starch suspensions has been suggested in for example G.B. A—515351 and separately the addition of emulsifiers to effect certain final properties has been suggested in U.S. A—3443990 and D.E. C—704718 but separately not in the context of modifying the gelatinization of the starch.

Thus in one embodiment a starch is modified by forming an aqueous slurry containing an ungelatinized starch and an effective amount of sodium or calcium stearoyl-2-lactylate, heating the slurry to a temperature and for a period of time sufficient to gelatinize the starch and drying the starch. The resultant modified starch possesses a smoother, creamier mouthfeel and a higher sheen without a loss of viscosity or body than a starch pregelatinized without sodium or calcium stearoly-2-lactylate.

In this first embodiment an aqueous slurry is formed containing an ungelatinized starch and sodium stearoyl-2-lactylate or calcium stearoyl-2-lactylate. Depending on the means employed to subsequently heat and dry the starch slurry, the percent solids in the aqueous slurry can vary as is common in the art. Generally, the solids level of the slurry employed when treating the starch is such as to facilitate processing and handling of the slurry. For example, when the means employed is drum drying, the solids levels in the slurry can be up to 50% by weight, preferably from 20 to 40% by weight. When the means of heating the slurry is a swept surface heat exchanger, preferably the solids level in the slurry is at most 10%, in order to prevent significant granule breakage during processing and to facilitate pumping and handling of the slurry.

In order to modify the resultant pregelatinized starch, sodium stearoly-2-lactylate (hereinafter referred to as "SSL") or calcium stearoyl-2-lactylate (hereinafter referred to as "CSL") is employed in the slurry in an amount effective to impart the resultant modified starch with a smoother, creamier mouthfeel and a higher sheen without a loss of viscosity or body than starches processed without SSL or CSL. When drum drying the starch slurry preferably the level of SSL is within the range of .04% to .75% by weight of the dry starch and the level of CSL is within the range of .08% to 2.25% by weight of the dry starch. When the starch is to be heated in a swept surface heat exchanger, preferably the level of SSL is within the range of .04% to 1% by weight of the dry starch and the level of CSL is within the range of .08% to 3% by weight of the dry starch. Higher levels of SSL or CSL result in a pregelatinized starch whose agglomerates or granules are too dense and unable to fully swell resulting in a low viscosity, poor mouthfeel and lack of body, and thus the resultant pregelatinized starch would be unsuitable for use in instant puddings.

Various types of ungelatinized starch can be modified by the process of this invention including starches such as tapioca starch, potato starch, corn starch or waxy maize starch, with the preferred starch being tapioca because of its clean taste and minimal flavor masking effects when used in food products, such as instant puddings. While preferably the starch is a raw starch, alternatively the starch can be a chemically modified starch (e.g., starch esters or starch ethers), the criteria being that the starch is ungelatinized.

While the pH of the slurry is not critical to the process of this invention, preferably the pH is within the range of 4 to 8 to further aid in granule stability. However, extremes in pH are to be avoided as they can be expected to cause chemical reactions when heated.

After forming the slurry of starch and SSL or CSL, the slurry is heated to a temperature and for a period of time sufficient to gelatinize the starch, and then the starch slurry is dried. In one preferred embodiment of this invention, the slurry is heated and dried simultaneously in a drum dryer. The drum drying shatters the starch granules and forms light porous agglomerates which when in solution swell providing a smoother, creamier mouthfeel, a higher gloss and sheen and a less grainy texture without a loss of viscosity or body than a starch processed without SSL or CSL. It is theorized that the SSL or CSL acts to modify the amylose and the amylopectin and prevent it from freely dispersing throughout the pudding system while still obtaining a dry starch capable of rehydration in an instant pudding system.

Drum drying conditions can generally be varied as is known in the art to obtain the best textural, sheeting and drying characteristics. Either a single or a double drum dryer may be employed. Generally the double drum dryer is run under the following conditions: % solids of 15—50%; slurry pH 4 to 6; slurry temperature of 5 to 45°C; slurry holding time of 0 to 24 hours; drum drier gap of .001 to .005 cm.; rpm of 0.5 to 7; and steam pressure of .7 to 7 kg per sq. cm. The single drum dryer is generally run under the following conditions: % solids of 20 to 45%; slurry pH 5.5 to 6.5; slurry holding time of 0 to 24 hours; steam pressure of 2.8 to 11.3 kg per sq. cm.; applicator roll adjusted to produce minimum sheet thickness and rpm adjusted to attain a moisture content of 1 to 9%. After the slurry has been drum dried, the dried modified starch can then be ground and screened to a particle size which is appropriate for the intended use of the modified starch. Preferably the starch is ground and screened to a size wherein the particles pass through a 200 mesh U.S. Standard screen.

When the slurry is to be drum dried, the slurry preferably additionally contains an emulsifier and/or a protein to further enhance the textural and mouth-feel attributes and control the viscosity of the resultant modified starch. Appropriate emulsifiers include polyglycerol mono stearate, mono and diglycerides, glycerol lactyl palmitate, glycerol lactyl oleate, succinylated mono glycerides, sorbitan 40, polyglycerol mono phosphate and phosphated mono glycerides. However, polysorbate 60 and lecithin are the most preferred emulsifiers as when either is used in combination with the sodium or calcium stearoly-2-lactylate, optimum mouthfeel, sheen, and textural characteristics (glossy surface, smoothness, creaminess) are imparted to the resultant drum dried starch when used in an instant pudding product. For example, when polysorbate 60 is added to the tapioca starch-SSL slurry, it is preferably added at levels between 0.1 to 2% by weight of the dry starch to make the starch more dispersible in solution and provide cohesive forces between starch agglomerates which gives more body to food products employing the starch, such as instant puddings. The slurry may also be drum dried with a protein, such as sodium caseinate, soy protein isolate, egg albumin or gelatin in order to impart such optimum characteristics as greater viscosity, mouthfeel and body to the resultant pregelatinized drum dried starch. These characteristics enable a reduction in the amount of starch needed in a pudding formulation, which reduction in turn helps reduce the flavor-masking effects of the starch. Use of the above combinations, or of SSL or CSI alone, results in a non-chemically modified starch which mimics the properties obtained by chemical treatments, such as the properties of the following chemically modified starches: acetylated distarch phosphates, hydroxypropylated distarch phosphates and hydroxypropylated distarch glycerols. It is theorized that the SSL or CSL modifies the amylose and amylopectin of the starch resulting in properties similar to cross linking (e.g., shortness, smoothness).

In another preferred embodiment of this invention, the starch can be heated in a conventional heat exchanger such as a swept surface heat exchanger (e.g., a Thermutator* or a swept surface jacketed kettle), followed by recovering the starch by drying, e.g., air drying, spray drying, vacuum drying or alcohol precipitation. Through the use of SSL or CSL in the above process, significantly more whole starch granules are retained which have been uniformly swelled to the maximum resulting in a high quality modified starch which has a creamier, smoother mouthfeel, a higher sheen and a less mucid and grainy texture than a starch processed without SSL or CSL. The SSL or CSL acts to inhibit granule swelling and bursting, reduce the tendency of the granules to shear and increase the uniformity to which the granules are swelled, thus reducing the amount of overcooked (burst) and undercooked (non-gelatinized) granules. Secondarily, as to any burst granules the SSL or CSL acts to modify the amylose and amylopectin and thus reduces any mucid mouthfeel. These desirable textural attributes are even more pronounced than that obtained in a drum drying process since whole granules are obtained versus agglomerates. It is theorized that these results are attained by the SSL or CSL modifying the amylose and amylopectin of the starch enabling the starch granules to stay in a state of maximum swell for longer periods of time without bursting.

Preferably the slurry is preheated to below the gelatinization temperature of the starch prior to employing a swept surface heat exchanger. When the slurry is thus preheated, this further aids in minimizing bursting due to overcooking and the appearance of a large percentage of undercooked and overcooked granules due to uneven heat treatment. The preheating results in a more gentle treatment of the starch because the temperature increase is much less, thereby allowing the granules to be swollen to a greater extent. As the number and size of whole granules in the starch are increased, the textural quality of the pudding is improved. When the starch is tapioca starch, preferably the slurry is preheated to about 65°C to 70°C and then heated in a swept surface heat exchanger to about 80°C to 90°C for a period of time effective to fully gelatinize substantially all of the starch granules. After heating, the slurry is then preferably sent through a cooling cycle to prevent overcooking of any granules, followed by conventional drying.

The modified starches prepared by the process of this invention can be used advantageously in food products, such as instant puddings, which require a pregelatinized starch with a smooth, creamy mouthfeel, having a high gloss and sheen and which is not grainy. These attributes are obtained without chemical modification of the starch and without the formation of undesirable residues or by-products. A further advantage of the present invention is that the level of modifier (SSL or CSL) employed to prepare the modified pregelatinized starch for use in instant puddings, is less than one third the level suggested for use of SSL or CSL as an additive (emulsifier) in a cooked pudding formulation where the starch employed is an ungelatinized starch requiring cooking.

In a second embodiment of the invention a starch is provided with the desirable characteristics by the addition of a protein and an emulsifier to a slurry of ungelatinized starch and thereafter gelatinizing and drying the starch slurry with a drum drier. Preferably the protein is either sodium caseinate, gelatin, egg albumin or a soy protein isolate, and the emulsifier is either lecithin or polysorbate 60, but optimum results are achieved by utilizing the combination of sodium caseinate and polysorbate 60. The resultant starch yields a product having the desirable characteristics which mimic those obtained by chemical modification of starch and which is especially suited for use in instant pudding mixes.

The Figures are amylograph curves of: tapioca starch; tapioca starch modified with polysorbate 60 and sodium caseinate; and chemically modified tapioca starch.

In this embodiment a pregelatinized starch is produced by drum drying an aqueous slurry containing a protein, an emulsifier and an ungelatinized starch. The resultant starch complex when ground to a fine particle size can be used in making an instant pudding which closely matches those made using chemically modified pregelatinized starches. The emulsifier acts to impart a creaminess, smoothness and gloss to the resultant puddings, while the protein adds viscosity and increases the texture and mouthfeel. The combination of the two ingredients, emulsifier and protein, provide advantages over plain starch that neither ingredient can fully produce independent of the other. Addition of a protein alone may result in undesirable gumminess and poor appearance, while addition of an emulsifier alone can result in loss of viscosity, but the combination of the two yields a synergistic effect resulting in a pregelatinized starch having desirable characteristics which mimic chemically modified starches, i.e., desirable texture, appearance, mouthfeel and viscosity.

Various starches may be modified according to the process of the instant invention including corn, potato, rice and amioca. However, tapioca starch is preferred as it has long been considered the prime starch source for instant puddings because of its clean taste and minimal flavor-masking effects.

Various emulsifiers as described in the first embodiment can be employed in the drum drying process to contribute creaminess, smoothness and gloss to the resultant pregelatinized starch when employed in instant puddings. However, the most preferred emulsifier is polysorbate 60 as it acts to impart characteristics to the resultant starch which most closely mimic a chemically modified starch, such as starches chemically modified with propylene oxide and either epichlorohydrin or phosphorus oxychloride.

The protein employed in the slurry can be gelatin, egg albumin or soy protein isolate, but the most preferable protein is sodium caseinate. Sodium caseinate when combined with an emulsifier, especially polysorbate 60, imparts optimum characteristics to the resultant pregelatinized starch which most closely mimics a chemically modified starch, such as a crosslinked starch modified with propylene oxide. Both the emulsifier and the protein are employed at levels effective to impart the desired creaminess, smoothness, gloss, viscosity, texture and mouthfeel to the resultant pregelatinized starch. These levels may vary depending upon the emulsifier and the protein, as well as the specific starch being so modified. Preferably when a starch, such as tapioca starch, is modified with polysorbate 60 and sodium caseinate, the sodium caseinate is employed at levels of .05 to 2% by weight of the starch, and polysorbate 60 is employed at levels of from 0.2 to 1% by weight of the starch.

When a slurry is formed preparatory to drum drying, the level of starch in the slurry must be such as can be effectively dried in the particular drum drier employed, as is common in the art. Generally, the level of starch in the slurry is within 15 to 50%, preferably 20 to 40% by weight of the slurry. After the addition of an effective amount of a protein and an emulsifier, the slurry is then drum dried under conditions tailored to optimize the textural, sheeting and drying characteristics of the particular starch being processed. Either a single drum drier or a double drum drier can be employed. A double drum drier is preferably employed under the same conditions as the first embodiment. Optimum conditions for a double drum drier would generally be that the starch at a level of 20% by weight of the slurry is slurried in the water with a protein and an emulsifier at a temperature of 20°C., the slurry being adjusted to a pH of 6 and the drum drier being adjusted so that the holding time is one hour, the drier gap is .003 cm, the rpm is 3 and the steam pressure is 4.2 kg per sq cm. When a single drum drier is employed, the following conditions are preferably employed: water 50 to 80% by weight of the slurry; starch 20 to 50% by weight of the slurry; pH of 5.5 to 6.5; holding time of 0 to 24 hours; steam pressure of 2.8 to 11.3 kg per sq cm; with the applicator roll generally being adjusted to produce minimum sheet thickness and the rpm adjusted to attain a moisture content of 2 to 9%.

After drum drying the resultant pregelatinized starch is then ground and screened to a size suitable for use in a product, such as an instant pudding. Preferably the dried pregelatinized starch is ground to a size wherein the particles pass through a 200 mesh U.S. Standard screen, optimally to a size wherein at least 95% by weight of the particles pass through a 230 mesh U.S. Standard screen.

A further unexpected advantage of drum drying a starch with a protein and emulsifier, such as sodium caseinate and polysorbate 60, is that this combination contributes sufficient body to the resultant puddings in order to allow a significant reduction in the amount of starch needed to prepare a satisfactory pudding. The reduction in the amount of starch minimizes flavor-masking effects of the starch by minimizing the starch flavor, which is common when a high percentage of starch is employed in a pudding.

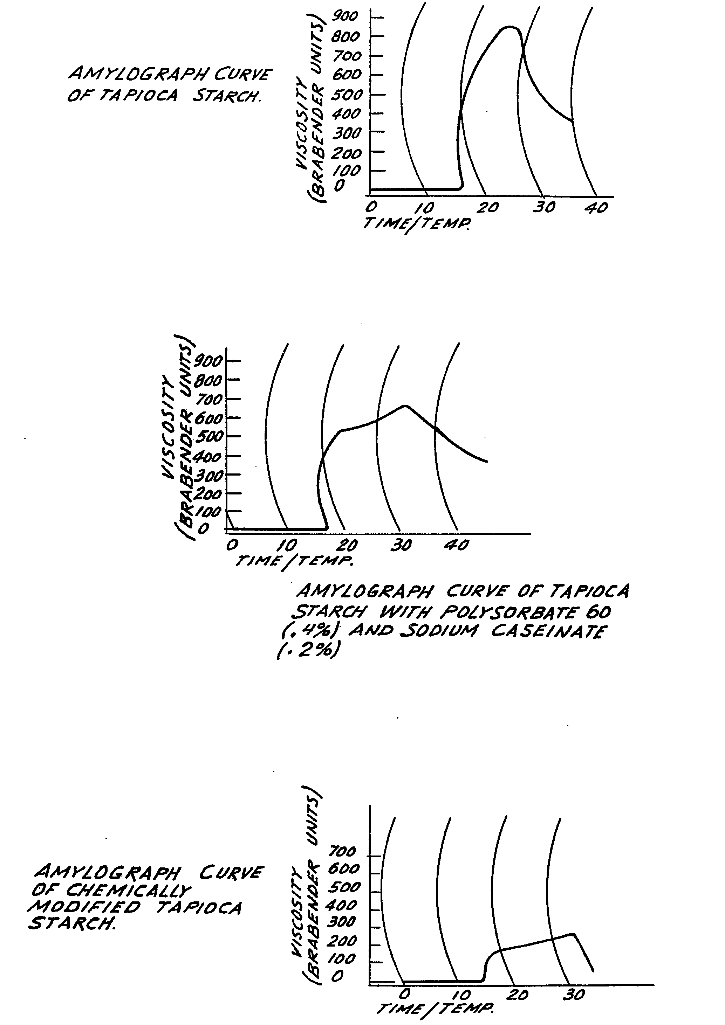

The amylograph curve (in the Drawing) of tapioca starch modified with polysorbate 60 and sodium caseinate by the process of this invention demonstrates the increased process tolerance and stability of the granules. A comparison of the amylograph curves (in the Drawing) of tapioca starch, of tapioca starch modified with polysorbate 60 and sodium caseinate and of chemically modified tapioca starch (modified with phosphorus oxychloride and acetic anhydride) demonstrates that by modifying tapioca starch with polysorbate 60 and sodium caseinate, the peak viscosity is suppressed while, more importantly, the peak is broadened similarly to that of chemically modified tapioca starch. This broadening of the peak indicates that the maximum swell of the granules can be attained for a longer period of time. Even though these additives cannot prevent the granules from rupturing during drum drying, they do retard the extreme overprocessing of the starch which can completely destroy all granules and granule fractions allowing for the dispersion of starch molecules which give a mucid mouthfeel to the puddings. While sodium caseinate itself does not alter the amylograph, it does help to strengthen the milk/phosphate/starch complex resulting in more mouthfeel and viscosity, which allows the loadweight of starch to be employed in the pudding to be reduced, such reduction in starch level in turn reducing starch flavor and flavor-masking effects of the starch.

The following examples illustrate various facets of the invention. It should be understood, however, that these examples are meant to be illustrative and the invention is not to be limited thereto but is as defined in the claims of this application.

### Example I

An aqueous slurry at a temperature of 20 to 25°C was formed containing ungelatinized tapioca starch at a level of 20% by weight of the slurry, SSL at a level of 0.15% by weight of the dry starch and polysorbate 60 at a level of 0.40% by weight of the dry starch. The slurry was pumped to a double drum dryer where the starch was gelatinized and dried. The drum drier was operated under the following conditions: steam pressure of 5.8 kg per sq. cm., drum speed of 3 rpm and drum gap of 0.003 cm. The dried modified pregelatinized starch was then ground and screened through a 230 mesh U.S. Standard screen.

The modified starch was then added at a level of 23.5 grams to an instant pudding mix containing approximately 76 grams of sugar, 27 grams of a cocoa blend, 1.5 grams of tetrasodium pyrophosphate, 3 grams of disodium orthophosphate, flavor and color.

Upon reconstituting the pudding mix with 474 ml of milk, a pudding was obtained which has a smooth, creamy mouthfeel and a high gloss and sheen. The textural and flavor attributes were judged to be at parity with an instant pudding prepared using a tapioca starch which had been chemically modified with epichlorohydrin and propylene oxide.

### Example II

An aqueous slurry at a pH of 6 is formed containing ungelatinized tapioca starch at a level of 7.2% by weight of the slurry, and SSL at a level of 1% by weight of the dry starch. The slurry is preheated to 65°C and fed into a steam jacketed swept surface-barrel heat exchanger (Thermutator (Trademark)) at a rate of about 3.8 liters per minute, with the starch being heated to 88 to 92°C for 1 minute, then cooled to about 50°C. The slurry was then diluted to a starch solids content of 3.6% by weight and then fed at a slurry temperature of 68°C into a spray dryer. The spray drying operating conditions were: nozzle spray pressure of about 35 kg per sq. cm., inlet temperature of 190 to 220°C, and outlet temperature of 100°C.

The modified starch was then added at a level of 25.0 grams to an instant pudding mix containing approximately 76 grams of sugar, 27 grams of a cocoa blend, 4.5 grams of phosphates (tetrasodium pyrophosphate and disodium orthophosphate), flavor and color. Upon reconstituting the pudding mix with 474 ml of mil, a pudding was obtained which had a smooth creamy mouthfeel, and a high gloss and sheen. The textural and flavor attributes were judged to be at parity with an instant pudding prepared using a tapioca starch which had been chemically modified with epichlorohydrin and propylene oxide.

### Example III

An aqueous slurry was formed containing 250 grams of ungelatinized tapioca starch, 0.1 grams of SSL, 0.7 grams of lecithin and 400 grams of water. The slurry was drum dried on a double drum dryer under the conditions specified in Example I. The dried starch was ground and screened through a 200 mesh U.S. Standard screen. When evaluated in an instant pudding mix, the pudding was judged to be about as smooth but with the same textural qualities as puddings containing a starch chemically modified with epichlorohydrin and propylene oxide.

### Example IV

An aqueous slurry was formed containing ungelatinized potato starch at a level of 20% by weight of the slurry, SSL at a level of .75% by weight of the dry starch and polysorbate 60 at a level of 1.0% by weight of the dry starch. The slurry was drum dried on a double drum drier, then ground and screened under the conditions specified in Example I. When evaluated in an instant pudding mix, the pudding was judged to have a smoother, creamier mouthfeel and a higher sheen without a loss of viscosity or body than a starch pregelatinized without the above modifiers. The resultant modified starch possessed properties which mimicked the properties of chemically modified starches.

### Example V

An aqueous slurry was formed containing ungelatinized tapioca starch at a level of 20% by weight of the slurry and CSL at a level of 1.0% by weight of the dry starch. The slurry was drum dried on a double drum drier, then ground and screened under the conditions specified in Example I. When evaluated in an instant pudding mix, the resultant pudding was judged to have a smooth, creamy mouthfeel and a high gloss and sheen without a loss of viscosity or body. The resultant modified starch possessed properties which resembled the properties of chemically modified starches.

### Example VI

A slurry was formed containing tapioca starch in water, the starch being present at a level of about 40% by weight of the slurry. Polysorbate 60 at a level of 0.4% by weight of the tapioca starch and sodium caseinate at a level of 0.2% by weight of the tapioca starch were added and mixed into the slurry. The slurry at room temperature was adjusted to a pH of 6 with phosphoric acid and then dried on a single drum drier under the following conditions: steam pressure of 2.8 kg per sq cm; a holding time of 1 hour; and with the applicator roll and rpm adjusted to attain a minimum sheet thickness and a moisture content of 4—5%. After drying, the starch was ground and screened through a 230 mesh U.S. Standard screen.

When evaluated in an instant pudding mix, the resultant prepared pudding was found to be very near parity to puddings prepared utilizing a chemically modified starch, particularly a tapioca starch modified with propylene oxide and epichlorohydrin. The resultant prepared pudding possessed a smooth, creamy mouthfeel and a glossy surface, but without a mucid mouthfeel.

### Example VII

Polysorbate 60 at a level of 0.4% by weight of the starch and sodium caseinate at a level of 0.2% by weight of the starch were added and mixed into an aqueous slurry containing 40% of amioca starch by weight of the slurry. The slurry at room temperature was adjusted to a pH of 6 with phosphoric acid and then dried on a double drum dryer under the following conditions: holding time of 1 hour; dryer gap of .003 cm; rpm of 3 and steam pressure of 5.6 kg per sq cm. After drying, the starch was ground and screened through a 230 mesh U.S. Standard screen.

When the modified amioca starch was evaluated in an instant pudding mix, the resultant pudding had a smooth and creamy mouthfeel, a firm texture and a glossy surface, but without a mucid mouthfeel. The resultant pudding was judged to by near parity to puddings prepared utilizing a chemically modified amioca starch, i.e., amioca starch modified with propylene oxide and epichlorohydrin.

### Example VIII

An aqueous slurry was prepared containing tapioca starch at a level of 40% by weight of the slurry, gelatin at a level of 3.7% by weight of the starch, and lecithin at a level of 0.2% by weight of the starch. The slurry, at room temperature and a pH of 6, was dried on a double drum dryer and ground under the conditions specified in Example II.

The modified tapioca starch when evaluated in an instant pudding mix exhibited a gel-like texture with a slow melt-away or mouth release effect as well as having a smooth, creamy mouthfeel, a firm texture and a glossy surface without a mucid mouthfeel. These desirable attributes resembled the attributes obtained through use of chemically modified starches.

### Claims

1. A process for making a pregelatinized starch product suitable for use in an instant pudding comprising mixing an aqueous slurry of ungelatinized starch with a complexing modifier which is
(a) at least one of sodium or calcium stearoyl-2-lactylate;
or (b) a complexing combination of a protein and an emulsifier;
and heating the slurry to a temperature and for a period of time sufficient to gelatinize the starch and to obtain whole starch granules uniformly swelled while minimizing bursting and undercooking of the starch granules and drying the slurry.

2. A process according to claim 1 wherein the slurry containing a stearoyl-2-lactylate contains in addition either or both of protein and emulsifier.

3. A process according to either of claims 1 and 2 wherein the protein is chosen from sodium caseinate, egg albumin, gelatin or soy protein isolate.

4. A process according to any one of claims 1 to 3 wherein the emulsifier is lecithin or polysorbate 60.

5. A process according to any one of claims 1 to 4 wherein the modifier is at least one of sodium or calcium stearoyl-2-lactylate and the slurry is heated and dried in a drum drier.

6. A process according to claim 5 wherein there is added by weight of dry starch 0.04% to 0.75% sodium stearoyl-2-lactylate 0.08% to 2.25% calcium stearoyl-2-lactylate.

7. A process according to any one of claims 1 to 4 wherein the modifier is a complexing combination of a protein and an emulsifier and the slurry by weight of starch contains 0.05 to 2% sodium caseinate and 0.2 to 1% polysorbate 60.

8. A process according to claim 1 wherein the modifier is a stearoyl-2-lactylate and the slurry is heated in a swept surface heat exchanger.

9. A process according to claim 8 wherein by weight of dry starch the sodium stearoyl-2-lactylate is 0.04% to 1% or the calcium stearoyl-2-lactylate is 0.08% to 3%.

10. A process according to either of claims 8 and 9 further comprising preheating the slurry to a temperature below the gelatinization temperature of the starch prior to heating the starch in the swept surface heat exchanger.

11. A process according to any one of claims 1 to 10 wherein the starch content of the slurry is 15 to 50% by weight.

12. A process according to any one of claims 1 to 11 further comprising grinding the dried starch to a size wherein the starch particles pass through a 200 mesh U.S. Standard screen.

13. A process according to claim 1 wherein the ungelatinized starch is a chemically modified ungelatinized starch.

### Revendications

1. Procédé de fabrication d'un produit amylacé prégélatinisé convenant pour l'utilisation dans un dessert instantané, consistant à mélanger une bouillie aqueuse d'amidon non gélatinisé avec un modificateur complexant qui est
(a) le stéaroyl-2-lactylate de sodium et/ou le stéaroyl-2-lactylate de calcium; ou
(b) une combinaison complexante d'une protéine et d'un émulsionnant;

et à chauffer la bouillie à une température et pendant une durée suffisantes pour gélatiniser l'amidon et pour obtenir des granules d'amidon entiers uniformément gonflés tout en réduisant au minimum l'éclatement et la cuisson insuffisante des granules d'amidon, et à sécher la bouillie.

2. Procédé suivant la revendication 1, caractérisé en ce que la bouillie contenant un stéaroyl-2-lactylate contient en outre une protéine et/ou un émulsionnant.

3. Procédé suivant l'une quelconque des revendications 1 et 2, caractérisé en ce que la protéine est choisie parmi le caséinate de sodium, l'albumine d'oeuf, la gélatine ou un isolat de protéine de soja.

4. Procédé suivant l'une quelconque des revendications 1 à 3, caractérisé en ce que l'émulsionnant est de la lécithine ou du polysorbate 60.

5. Procédé suivant l'une quelconque des revendications 1 à 4, caractérisé en ce que le modificateur est un stéaroyl-2-lactylate de sodium et/ou de calcium et en ce que la bouillie est chauffée et séchée sur un séchoir à tambour.

6. Procédé suivant la revendication 5, caractérisé en ce qu'on ajoute par rapport au poids de l'amidon sec 0,04% à 0,75% de stéaroyl-2-lactylate de sodium ou 0,08% à 2,25% de stéaroyl-2-lactylate de calcium.

7. Procédé suivant l'une quelconque des revendications 1 à 4, caractérisé en ce que le modificateur est une combinaison complexante d'une protéine et d'un émulsionnant et en ce que la bouillie contient par rapport au poids de l'amidon 0,05% à 2% de caséinate de sodium et 0,2 à 1% de polysorbate 60.

8. Procédé suivant la revendication 1, caractérisé en ce que le modificateur est un stéaroyl-2-lactylate et en ce que la bouillie est chauffée dans un échangeur de chaleur à balayage superficiel.

9. Procédé suivant la revendication 8, caractérisé en ce que la proportion pondérale du stéaroyl-2-lactylate de sodium par rapport au poids de l'amidon sec est de 0,04% à 1% ou en ce que la proportion pondérale de stéaroyl-2-lactylate de calcium par rapport au poids de l'amidon sec est de 0,08 à 3%.

10. Procédé suivant l'une quelconque des revendications 8 et 9, caractérisé en ce qu'il consiste en outre à préchauffer la bouillie à une température inférieure à la température de gélatinisation de l'amidon avant de chauffer l'amidon dans un échangeur de chaleur à balayage superficiel.

11. Procédé suivant l'une quelconque des revendications 1 à 10, caractérisé en ce que la teneur en amidon de la bouillie est de 15 à 50% en poids.

12. Procédé suivant l'une quelconque des revendications 1 à 11, caractérisé en ce qu'il consiste en outre à broyer l'amidon séché à une taille de particules pour laquelle les particules d'amidon traversent un tamis de 0,074 mm d'ouverture de mailles (200 mesh US).

'13. Procédé suivant la revendication 1, caractérisé en ce que l'amidon non gélatinisé est un amidon non gélatinisé chimiquement modifié.

**Patentansprüche**

1. Verfahren zum Erzeugen eines vorgelatinierten Stärkeproduktes, das zur Verwendung in einem Instantpudding geeignet ist, wobei eine wäßrige Aufschlämmung einer nichtgelatinierten Stärke mit einem komplexbildenden Modifikator vermischt wird, der aus

(a) mindestens einer der Verbindungen Natrium- oder Calcium-Stearoyl-2-lactylat oder

(b) einer komplexbildenden Kombination eines Proteins und eines Emulgators

besteht, worauf die Aufschlämmung so lange auf eine so hohe Temperatur erhitzt wird, daß die Stärke gelatiniert wird und einheitlich gequollene, ganze Stärkekörner erhalten werden, während ein Platzen und ungenügendes Kochen der Stärkekörner möglichst vermieden werden, und daß danach die Aufschlämmung getrocknet wird.

2. Verfahren nach Anspruch 1, dadurch gekennzeichnet, daß die Aufschlämmung ein Stearoyl-2-lactylat und außerdem ein Protein und/oder einen Emulgator enthält.

3. Verfahren nach Anspruch 1 oder 2, dadurch gekennzeichnet, daß das Protein ausgewählt ist aus isoliertem Natriumkaseinat, Eialbumin, Gelatine und Sojaprotein.

4. Verfahren nach einem der Ansprüche 1 bis 3, dadurch gekennzeichnet, daß der Emulgator Lecithin oder Polysorbat 60 ist.

5. Verfahren nach einem der Ansprüche 1 bis 4, dadurch gekennzeichnet, daß der Modifikator mindestens einer der Vedrbindungen Natrium- oder Calcium-Stearoyl-2-lactylat besteht und die Aufschlämmung in einem Trommeltrockner erhitzt und getrocknet wird.

6. Verfahren nach Anspruch 5, dadurch gekennzeichnet, daß auf das Stärketrockengewicht bezogen 0,04 bis 0,75% Natrium-Stearoyl-2-lactylat und 0,08 bis 2,25% Calcium-Stearoyl-2-lactylat zugesetzt werden.

7. Verfahren nach einem der Ansprüche 1 bis 4, dadurch gekennzeichnet, daß der Modifikator eine komplexbildende Kombination eines Proteins und eines Emulgators ist und die Aufschlämmung auf das Trockenstärkegewicht bezogen 0,05 bis 2% Natriumkaseinat und 0,2 bis 1% Polysorbat 60 enthält.

8. Verfahren nach Anspruch 1, dadurch gekennzeichnet, daß der Modifikator aus Stearoyl-2-lactylat besteht und die Aufschlämmung in einem Wärmeaustauscher mit bestrichener Oberfläche erhitzt wird.

9. Verfahren nach Anspruch 8, dadurch gekennzeichnet, daß auf das Stärketrockengewicht bezogen 0,04 bis 1% Natrium-Stearoyl-2-lactylat oder 0.08 bis 3% Calcium-Stearoyl-2-lactylat zugesetzt werden.

10. Verfahren nach Anspruch 8 oder 9, dadurch gekennzeichnet, daß vor dem Erhitzen der Stärke in einem Wärmeaustauscher mit bestrichener Oberfläche die Aufschlämmung auf eine Temperatur unter der Gelatiniertemperatur der Stärke erhitzt wird.

11. Verfahren nach einem der Ansprüche 1 bis 10, dadurch gekennzeichnet, daß die Aufschlämmung 15 bis 50 Gew.% Stärke enthält.

12. Verfahren nach einem der Ansprüche 1 bis 11, dadurch gekennzeichnet, daß die getrocknete Stärke so fein vermahlen wird, daß die Stärketeilchen durch ein US-Normsieb von 200 mesh hindurchgehen.

13. Verfahren nach Anspruch 1, dadurch gekennzeichnet, daß die nichtgelatinierte Stärke aus chemisch modifizierter, nichtgelatinierter Stärke besteht.

0011479

AMYLOGRAPH CURVE
OF TAPIOCA STARCH.

VISCOSITY (BRABENDER UNITS)

TIME/TEMP.

AMYLOGRAPH CURVE OF TAPIOCA
STARCH WITH POLYSORBATE 60
(.4%) AND SODIUM CASEINATE
(.2%)

VISCOSITY (BRABENDER UNITS)

TIME/TEMP.

AMYLOGRAPH CURVE
OF CHEMICALLY
MODIFIED TAPIOCA
STARCH.

VISCOSITY (BRABENDER UNITS)

TIME/TEMP.

1